## Europäisches Patentamt

## European Patent Office

## Office européen des brevets

(11) Veröffentlichungsnummer: **0 199 322**

**B1**

(12) **EUROPÄISCHE PATENTSCHRIFT**

(45) Veröffentlichungstag der Patentschrift:
25.01.89

(51) Int. Cl.⁴: **F 16 J 15/32,** F 28 F 9/00

(21) Anmeldenummer: **86105462.5**

(22) Anmeldetag: **21.04.86**

(54) **Bürstendichtung.**

(30) Priorität: **20.04.85 DE 3514382**

(43) Veröffentlichungstag der Anmeldung:
**29.10.86 Patentblatt 86/44**

(45) Bekanntmachung des Hinweises auf die Patenterteilung:
**25.01.89 Patentblatt 89/4**

(84) Benannte Vertragsstaaten:
**BE CH FR GB IT LI NL SE**

(56) Entgegenhaltungen:
**CH-A-609 759**
**DE-A-2 000 886**
**DE-A-3 023 609**
**DE-B-1 065 858**
**DE-B-1 285 268**
**DE-C-398 068**
**DE-C-951 122**
**GB-A-1 061 310**
**GB-A-2 021 209**
**GB-A-2 123 099**
**US-A-4 093 245**
**US-E-30 206**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Hagemeister, Klaus, Dipl.- Ing., Manzostrasse 28 b, D-8000 München 50 (DE)**
Erfinder: **Wöhrl, Bernhard, Dr., Planegger Strasse 21, D-8035 Gauting (DE)**

## Beschreibung

Beispielsweise bei Brennkraftmaschinen, Gasturbinentriebwerken, Strahltriebwerken oder Wärmetauschern besteht oftmals die Forderung, insbesondere mittels hochtemperierter Medien, z. B. Heißgasen zu durchströmende Kanäle an bestimmter Stelle abzusperren, um z. B. eine anderweitige Heißgasströmungsrichtung zu erzwingen. Mit Rücksicht auf dabei z. B. auftretende, oftmals extrem unterschiedliche thermische Belastungen und Wärmedehnungen benachbarter Kanalwandabschnitte bzw. Bauteile ist es somit praktisch nicht möglich, eine starre, dichtende Verbindung zwischen den Bauteilen vorzusehen.

Neben den genannten thermischen Problemen müssen bei einer derartigen Kanalabsperrung oftmals z. B. als Ursache von Fahrzeugstoßbelastungen auftretende Schwingungen bzw. Schwingungsauslenkungen zumindest eines der beiden Bauteile gegenüber dem anderen berücksichtigt werden, die ebenfalls eine starre Anbindung des betreffenden Absperrkörpers zwischen benachbarten Wandabschnitten weitestgehend ausschließen.

Schon vorgeschlagene mechanische, mit korrespondierenden Dichtbelägen im Reibschluß arbeitende Dichtungen zur bewegungskompensatorischen Absperrung von Kanälen sind vergleichsweise extrem kompliziert aufgebaut und einem vergleichsweise raschen und hohen Verschleiß ausgesetzt.

Bei einer aus der GB-A-10 61 310 bekannten, dem Oberbegriff des Patentanspruchs 1 als Stand der Technik zugrunde gelegten Lösung handelt es sich um eine labyrinthartige Dichtungseinrichtung zwischen relativ zueinander verdrehbar angeordneten Rotationskörpern, insbesondere zwischen einer äußeren und einer inneren Welle. Dabei soll z. B. an der äußeren Welle ein federelastisch ausgebildeter, ringförmiger Dichtungskamm angeordnet sein; der Dichtungskamm soll ferner radial gegen die innere Welle vorstehende Rippen aufweisen, deren äußerste L- bzw. T-förmig abgewinkelte Endabschnitte jeweils aneinander benachbarte, axial beabstandete Zwischenräume einschließen, die sich zum Inneren des Kammes hin kammerartig erweitern; in genannte Zwischenräume nebst Erweiterungen des Kammes sollen Radialflansche der inneren Welle frei beweglich eingreifen; auf diese Weise sollen bei der bekannten Lösung relative exzentrische Wellenbewegungen kompensiert werden, ohne eine Veränderung der benötigten axialen Zwischenraumbeabstandung hervorzurufen. Bezüglich in Axialrichtung auftretender Differenzbewegungen der Wellen - z. B. thermisch bedingt - unter gleichzeitiger Beherrschung des Dichtproblems und des Dichtungsverschleißes vermittelt die bekannte Lösung keinen greifbaren Lösungsansatz.

Aus der US-E-30 206 ist ein Anwendungsfall einer Bürstendichtung nebst vorbereitender Bürstenherstellung dazu bekannt.

Gemäß dem Anwendungsfall, z. B. bei einer Turbomaschine, soll das als Bürste ausgebildete Dichtelement einerseits am Stator fest verankert sein und andererseits, mit dem übrigen freien Ende, lose kontaktierend an einer zugeordneten Gegenfläche des Rotors aufsitzen; auf diese Weise sollen insbesondere als Ursache instationärer Betriebszustände hervorgerufene thermische Differenzdehnungen zwischen Rotor und Stator bei minimalem Dichtungsleckfluß abdichtend kompensiert werden.

Zwecks Herstellung der Bürste sollen im aus der US-E bekannten Fall Bürstenbündel erstellt, dann zusammengefaltet und hierauf faltungsseitig in Bohrungen eines ersten Ringes eingesetzt und mit letzterem verdrahtet werden; sich dabei teilweise in Umfangsrichtung überlappende äußere offene Enden der Bürstenbündel sollen im Wege weiterer Fertigungsprozesse in eine Umfangsaussparung eines dem ersten koaxial zugeordneten zweiten Ringes eingesetzt und mit letzterem verschweißt werden; als Folge einer mittigen, ring-koaxialen Durchschneidung der Bürstenbündel soll dann der die Faltungen enthaltende eine Restteil der Bürstenbündel nebst erstem Ring gänzlich entfernt werden, so daß der übrige, in den zweiten Ring fest eingebundene Bürstenrestteil die schon gemäß Anwendungsfall besprochene Bürstendichtung mit nach außen gegen den Rotor freien und ungeführten Borstenenden ausbilden kann.

In kritischen Betriebszuständen erfolgt somit eine schleifende Stauchung des radial äußersten Bürstenendes; im unkritischen (stationären) Betriebszustand soll ein minimaler Dichtspalt mit stets vorhandenem minimalen Leckfluß einhergehen. Der bekannte Fall vermittelt somit keinerlei Hinweis auf eine frei bewegliche, bezüglich des äußeren Endes stets abdichtend zwangsgeführte Bürste der Dichtung.

Aus der DE-PS 30 23 609 ist eine Turbine für ein Gasturbinentriebwerk mit einem die Spitzen der Läuferschaufeln umschließenden, vom Turbinengehäuse getragenen und relativ hierzu in radialer Richtung wärmedehnbar angeordneten Mantelring, der einen Abschnitt der radial äußeren Wand des ringförmigen Gaskanals bildet, bekannt. Dabei soll der aus Keramikmaterial bestehende Mantelring radial vom Turbinengehäuse über eine ringförmige Anordnung vorstehender Borsten abgestützt und im Abstand gehalten sein, die am Turbinengehäuse derart angeordnet sind, daß sie eine ringförmige Bürstendichtung bilden. Durch die bürstenartige Trägeranordnung soll erreicht werden, daß bei voller Aufrechterhaltung der Konzentrizität durch die Federkraft der einzelnen Borsten gewisse Differenzen im Abstand zwischen Mantelring und Gehäusering ausgeglichen werden können, ohne daß zwischen diesen beiden Teilen eine wesentliche Kraftübertragung stattfinden kann. Insbesondere in Kombination mit dem im Betrieb geringen Wärmedehnungen ausgezetzten Keramikmantelring soll hierbei also ein Beitrag zur Schaufelspitzenspaltoptimierung in die Wege geleitet werden können. Über dem gesamten Betriebszustand sieht dieser bekannte Fall somit eine in Radialrichtung stützende und tragende Funktion vor; mit anderen Worten ist das Bürstenkonzept bzw. die Bürste in Dichtungslängsrichtung bzw. in radialer Richtung räumlichen Bewegungsbeschränkungen unterworfen.

Der Erfindung liegt die Aufgabe zugrunde, eine insbesondere zur Heißgasabsperrung geeignete, bewegungskompensatorische Dichtung verschleiß- und wartungsarm auszubilden.

Die gestellte Aufgabe ist gemäß Kennzeichnungsteil des Patentanspruchs 1 erfindungsgemäß gelöst.

Auf diese Weise wird eine gegebenenfalls unmittelbar dem Heißgasstrom aussetzbare Absperrdichtung geschaffen, die die Beherrschung extrem unterschiedlicher Relativbewegungen zwischen benachbarten Bauteilen ermöglicht, ohne vorrangig in Dichtungslängsrichtung (also in Querrichtung zwischen beiden Bauteilen) räumlichen Bewegungsbeschränkungen unterworfen zu sein.

Die erfindungsgemäße Fugenausbildung sieht eine in allen Richtungen freie und dabei stets abdichtende Bürstenumschließung vor. Durch die Fuge wird die Bürste also zwangsgeführt, so daß auch im Falle vergleichsweise hoher Gastemperaturen, bei denen das Bürstenmaterial zumindest teilweise seine elastischen Eigenschaften verlieren sollte, immer ein abdichtender Kontakt zwischen den inneren Fugenwandungen und den Borsten oder Fäden der Bürste erhalten bleiben kann.

Vorteilhafte Ausgestaltungen des Erfindungsgegenstandes ergeben sich aus den Merkmalen der Patentansprüche 2 bis 16.

Anhand der Zeichnungen ist die Erfindung beispielsweise weiter erläutert; es zeigen:

Fig. 1   eine perspektivische Ansicht zweier benachbarter Gehäusebauteilabschnitte nebst Bürstendichtung,
Fig. 2   in Blickrichtung A der Fig. 1 gesehene Einzelheiten der Bürstendichtung,
Fig. 3   die prinzipiell aus Fig. 1 entnehmbare Bürstendichtung, jedoch unter weiterer Zugrundelegung eines gegenüber Fig. 1 reduzierten Bauteilabstands sowie abgewandelter Dichtungstrag- und Befestigungsmittel,
Fig. 4   eine durch einen Gehäuseschnitt freigelegte Stirnansicht eines Profilrohrwärmetauschers als Anwendungsfall für die erfindungsgemäße Bürstendichtung,
Fig. 5   die Vorderansicht einer Bürstendichtung nebst Tragelement und Gegenstück in einer zweiten Ausführungsform und
Fig. 6   die Vorderansicht einer Bürstendichtung nebst Tragelement und Gegenstück in einer dritten Ausführungsform.

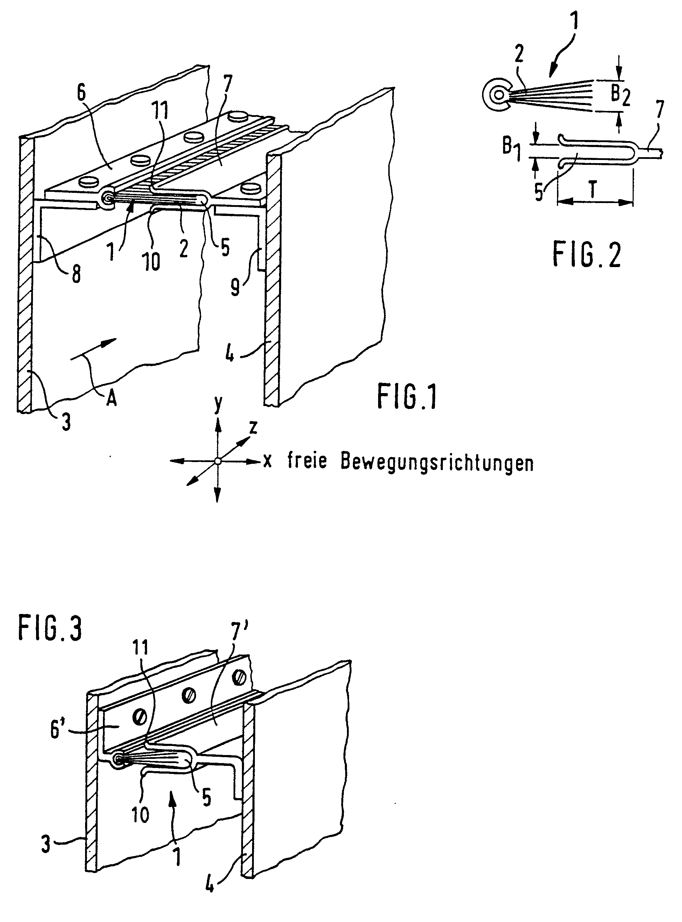

Fig. 1 veranschaulicht eine Bürstendichtung 1 mit Borsten 2 zur Überbrückung des betreffenden Abstandsspalts zwischen zwei relativ zueinander verschiebbaren statischen Bauteilen 3, 4, die hier z. B. heißgasführende Wandteile eines Maschinenabgaskanals sein können.

Dabei soll also das Ende der Borsten 2 mit dem ersten Bauteil 3 fest verbunden sein; das übrige freie Ende der Borsten 2 soll dabei in einer Fuge 5 des zweiten Bauteils 4 in allen drei Richtungen x, y, z beweglich geführt sein.

Vorteilhaft soll dabei ferner die Fuge 5 eine auf die zu erwartende Verschiebebewegung zumindest des zweiten Bauteils 4 gegenüber dem ersten, 3, erforderliche Tiefe T aufweisen, um so etwaige als Temperaturdehnungen oder z. B. Schwingungen verursachte relative Bauteilbewegung kompensieren zu können (s.h. Fig. 2).

Um in allen vorkommenden Betriebszuständen eine einwandfreie Heißgasabsperrung sicherstellen zu können, sollte ferner die Fuge 5 eine Breite $B_1$ aufweisen, die von kleinerem Ausmaß als die Breite $B_2$ des sich aufspreizenden, hier z. B. ungefaßten Borstenendes der Bürstendichtung 1 ist (Fig.2).

Im Rahmen einer mechanisch äußerst einfachen Ausgestaltung können ferner die Borsten 2 oder Fäden der Bürstendichtung 1 an einem, also längs der Bauteile 3, 4 sich erstreckenden Tragelement 6 gefaßt und gehalten sein; die Fuge 5 kann Bestandteil eines sich bauteilwandparallel erstreckenden gabelförmigen Gegenstückes 7 sein.

Weiterhin können das Tragelement 6 und das betreffende Gegenstück 7 über ein zugehöriges Winkelstück 8, 9 mit dem zugehörigen Bauteil 3, 4 verbunden sein.

Gemäß Fig. 3 ist das betreffende Tragelement 6' wie auch das die Fuge 5 enthaltende Gegenstück 7' jeweils als integrales Befestigungsmittel ausgebildet. Abweichend von Fig. 1 verkörpert Fig. 3 eine räumlich versetzte abgewinkelte Befestigungsweise des Tragelements 6' und des Gegenstückes 7' an den betreffenden Bauteilen 3, 4.

Fig. 1 bis 3 lassen ferner erkennen, daß die Fuge 5 mit eintrittsseitig beidseitig nach außen abgerundet aufgebogenen Stirnkanten 10, 11 ausgestattet sein kann, um so die Dichtungsmontage zu erleichtern.

Gemäß Fig. 1 und 3 kann die Bürstendichtung 1 zwischen geradlinigen, 3, 4, oder - nicht dargestellt - vorzugsweise gleichsinnig gekrümmt verlaufenden Bauteilen ausgebildet bzw. angeordnet sein.

Im Hinblick auf die jeweils herrschenden Temperaturkriterien wären geeignete Werkstoffe für die Bürstendichtung 1 beizuziehen; z. B. können deren Borsten 2 oder Fäden aus einem hoch-warm-festen metallischen Werkstoff gefertigt oder als Glasfäden ausgebildet sein.

Die erfindungsgemäße Bürstendichtung läßt sich insbesondere als Heißgasabsperrdichtung vorteilhaft zwischen Gehäusestrukturbauteilen von Turbomaschinen, insbesondere Gasturbinentriebwerken, einsetzen.

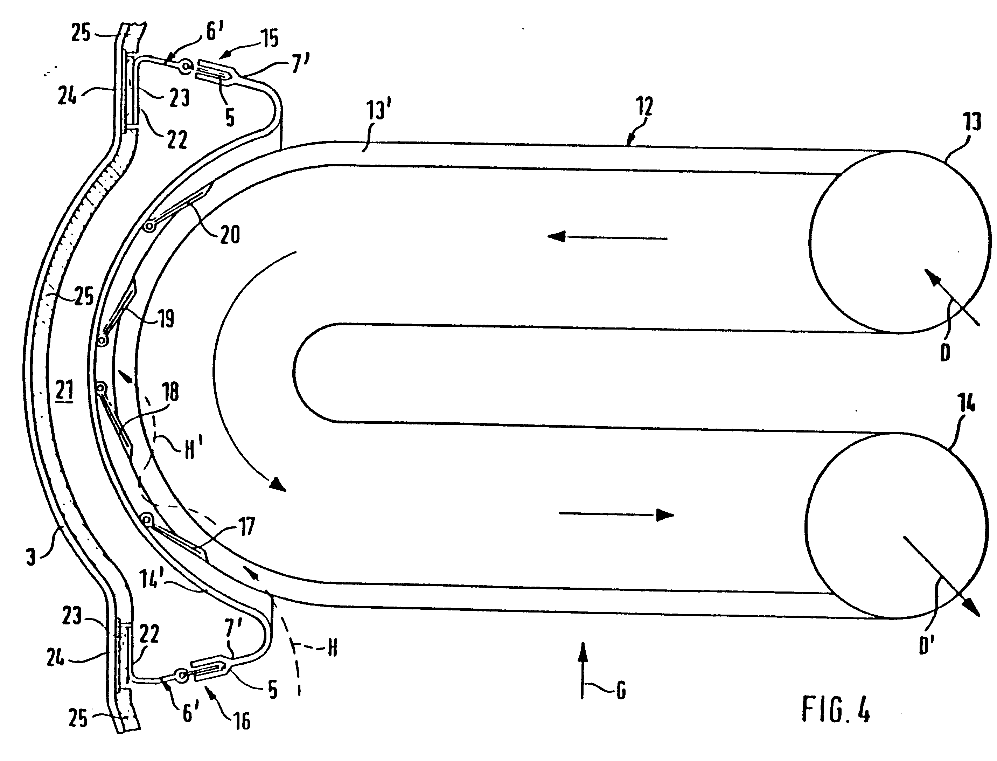

Ein vorteilhafter Einsatz als Heißgasabsperrdichtung für Profilrohr-Wärmetauscher ist durch das nachstehend näher erläuterte Ausführungsbeispiel nach Fig. 4 verdeutlicht.

Gemäß Fig. 4 handelt es sich also um einen Profilrohr-Wärmetauscher in Kreuz-Gegenstrom-Bauweise, bei dem die von Heißgasen G umströmbare Matrix 12 ein- und austrittsseitig an voneinander getrennte, zylindrische Druckluftführungen 13,14 angeschlossen ist und aus von diesen seitlich auskragenden, im wesentlichen U-förmigen Matrixrohrbügeln, z. B. 13', besteht. Dabei wird die über die Heißgase G aufzuheizende Druckluft gemäß Pfeil D der oberen zylindrischen Druckluftführung 13 zugeführt, durchströmt dann gemäß der aufgezeigten Pfeilrichtungsfolge die Matrix 12 und wird dann, im aufgeheizten Zustande, gemäß Pfeilrichtung D' aus der unteren zylindrischen Druckluftführung 14 einem geeigneten Verbraucher, z. B. der Brennkammer eines Gasturbinentriebwerkes, zugeführt. Dabei ist ferner hier ein z. B. die Matrix 12 im äußeren Umlenkungsbereich umrandendes Schalenelement 14' als Matrixteilabdeckschale ausgebildet, die betrieblichen, insbesondere thermisch bedingten Differenzbewegungen unterworfen ist.

Dabei sollen im Sinne der Fig. 1 bis 3 ausgebildete, bewegungskompensatorische Heißgasabsperrdichtungen als Bürsten 15, 16 zwischen dem Schalenalement 14' als erstem Bauteil und dem thermisch isolierten, die Heißgase führenden Außengehäuse 3 als zweitem Bauteil vorgesehen sein. Fig. 4 verkörpert also die Anwendung der Bürstendichtungen an stromauf- und stromabwärtiger Stelle dieses Außengehäuses 3, wobei die Bauteile 6' Tragelemente der bewegungskompensatorisch angeordneten Bürsten 15, 16 -zwischen dem Außengehäuse 3 bzw. einer außengehäuseseitigen Berandungssektion im Matrixbogenbereich und dem benachbarten Schalenelement 14'- sind. Letzteres kann wiederum im Hinblick auf Differenzbewegungen der Matrix 12 bewegungskompensatorisch unter Bezug auf den äußeren umlenkungsseitigen Rand der Matrix angeordnet sein, was durch am Schalenelement 14' befestigte weitere Bürstendichtungen 17, 18, 19, 20 verdeutlicht ist, die den äußeren Bogenbereich der Rohrbügel 13' abdichtend übergreifen. Die Bürsten 16 bzw. 15 der Heißgasabsperrdichtungen verhindern also zunächst eine für den Wärmetauschprozeß ungenutzte Strömung von Heißgasen in den Zwischenraum 21 zwischen Schalenelement 14' und Außengehäuse 3. Die Heißgase werden im seitlichen Gehäusebereich (Pfeil H) also in Richtung auf den bogenförmigen, randständigen Matrixbereich abgelenkt. In Kombination des Schalenelements 14' mit den übrigen Bürstendichtungen 17, 18, 19, 20 ergibt sich dann weiter eine schlangenlinienförmige Zwangsführung H' des randständigen Heißgasstromanteils, und damit im äußeren Matrixumlenkungsbereich ein akzeptabler Kreuz-Gegenstrom-Wärmetauschprozeß.

Die zuvor erwähnten Bürsten 15, 16 der Heißgasabsperrdichtungen sind also an den Tragelementen 6' befestigt und greifen andererseits abdichtend in die Fugen 5 der gabelförmigen Gegenstücke 7' des Schalenelements 14' ein.

Die Tragelemente 6' sind z. B. mit ihren integralen abgewinkelten Endpartien 22 an einen Metall-Filz-Isolierkörper 23 angelötet, der auf der gegenüberliegenden Seite eine ebenfalls an diesen angelötete Platte 24 trägt, die ihrerseits am Außengehäuse 3 befestigt ist. Diese Befestigung nebst Isolierkörper 23 stellt eine von der sonstigen thermischen Isolierung 25 des Gehäuses 4 gesonderte Isolierbefestigungseinheit dar.

Fig. 4 erfüllt also die Merkmale nach Anspruch 11 und 12, wonach das jeweilige Tragelement 6' für die Bürsten an einem geradlinigen Bauteilabschnitt (Gehäuse 3), das jeweilige gabelförmige Gegenstück 7' an bzw. von einem gegen den geradlinigen Bauteilabschnitt abgekrümmten Ende des Schalenelements 14' ausgebildet ist, wobei die Dichtunspaarung zwischen Bürste und Fuge 5 in einer gemeinsamen, zwischen zwei Bauteilen (Gehäuse 3, Schalenelement 14') geneigten Ebene verläuft.

Die erfindungsgemäße Bürstendichtung kann in Abweichung von Fig. 4 vorteilhaft auch zwischen einer oder mehreren seitlichen Berandungsleitwänden der Wärmetauschermatrix 12 und einem entsprechenden seitlichen Abschnitt des die Heißgase führenden Gehäuses 3 angeordnet sein, um so. z. B. thermisch oder aufgrund von Fahrzeugstoßbelastungen verursachte relative Differenzbewegungen zwischen den Berandungsleitwänden und dem Gehäuse 3 abdichtend zu überbrücken. Die seitliche Bürstendichtung hätte dann die Aufgabe, die in den betreffenden Zwischenraum zwischen Berandungsleitwand oder -wänden und Gehäuse 3 eingedrungenen Heißgasanteile in die Richtung der Heißgashauptströmung G auf die Matrix 12 abzulenken.

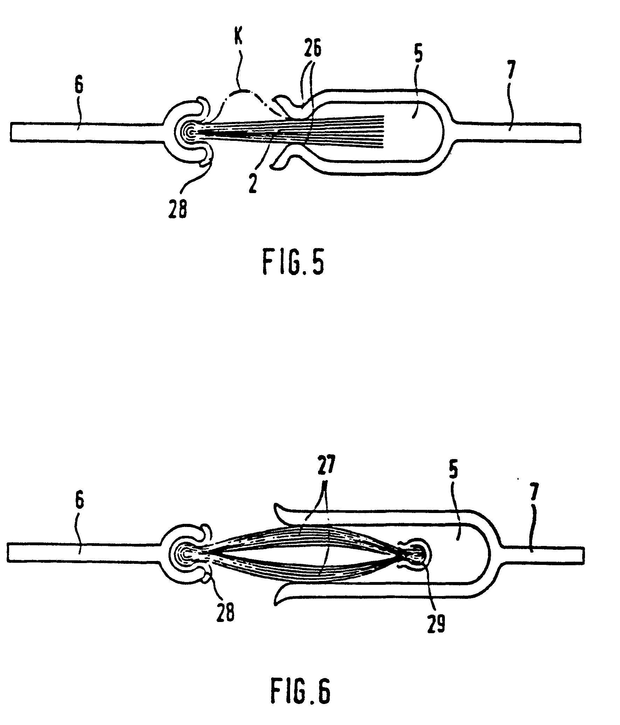

Bei der Bürstendichtung nach Fig. 5 soll die das übrige, hier ungefaßte Bürstenende aufnehmende Fuge 5 eintrittsseitig eine zangenartige Borstenführungsengstelle 26 aufweisen, hinter welcher die Fuge 5 über das sich aufspreizende Bürstenende hinaus sich verbreitert ist.

Bei der Bürstendichtung nach Fig. 6 sollen die Borsten 27 oder Fäden beidendseitig mittels klammerartiger Glieder 28, 29 so gefaßt sein, daß sie mittels gleichförmig radial sich aufweitender Bogenabschnitte an den Innenwandabschnitten der gabelförmigen Fuge 5 beweglich und abdichtend anliegen.

Die Bürstendichtungsalternativen nach Fig. 5 und 6 haben den wesentlichen Vorteil, daß auch bei vergleichsweise großen Differenzbewegungsphasen zwischen den Bauteilen, z. B. 3 und 4 nach Fig. 1, also aus Bewegungen, insbesondere in Richtung x und/oder y (Fig.1), ein Ausknicken K - Fig. 5 - der betreffenden Borsten 2 bzw. 27 aus der Fuge 5 verhindert werden kann.


**Patentansprüche**

1. Dichtung zur Überbrückung eines Spalts zwischen zwei relativ zueinander beweglichen Bauteilen (3, 4), bei der ein mit dem ersten Bauteil (3) fest verbundenes Dichtelement mit seinem übrigen Ende in einer Fuge (5) des zweiten Bauteils (4) frei beweglich geführt ist, dadurch gekennzeichnet, daß das Dichtelement eine Bürste (2) ist, die in der Fuge (5) zwangsgeführt und von letzterer stets abdichtend umschlossen ist.

2. Dichtung nach Anspruch 1, dadurch gekennzeichnet, daß die Fuge (5) eine auf die zu erwartende Bauteilverschiebebewegung abgestimmte Tiefe (T) aufweist.

3. Dichtung nach Anspruch 1 und 2, dadurch gekennzeichnet, daß die Fuge (5) eine Breite ($B_1$) aufweist, die von kleinerem Ausmaß als die Breite ($B_2$) der sich aufspreizenden Bürstenpartie ist.

4. Dichtung nach Anspruch 1, 2 und 3, dadurch gekennzeichnet, daß die Borsten oder Fäden der Bürste (2) an einem sich über die gesamte Bauteillänge bzw. sich bauteilwandparallel erstreckenden Tragelement (6) gefaßt und gehalten sind.

5. Dichtung nach den Ansprüchen 1 bis 4, dadurch gekennzeichnet, daß die Fuge (5) Bestandteil eines sich über die gesamte Bauteillänge bzw. bauteilwandparallel erstreckenden gabelförmigen Gegenstückes (7) ist.

6. Dichtung nach den Ansprüchen 4 und 5, dadurch gekennzeichnet, daß das Tragelement (6) und das Gegenstück (7) über gesonderte Winkelstücke (8, 9) oder mittels integraler Winkelstücke (Fig. 3) mit dem zugehörigen Bauteil (3, 4) verbunden sind.

7. Dichtung nach den Ansprüchen 1 bis 6, dadurch gekennzeichnet, daß die Fuge (5) mit eintrittsseitig beidseitig nach außen abegrundet aufgebogenen Stirnkanten (10, 11) ausgestattet ist.

8. Dichtung nach einem oder mehreren der Ansprüche 1 bis 7, dadurch gekennzeichnet, daß die Fuge (5) eintrittsseitig eine zangenartige Borstenführungsengstelle (26) aufweist, hinter welcher die Fuge (5) über das sich aufspreizende Bürstenende hinaus verbreitert ist.

9. Dichtung nach einem oder mehreren der Ansprüche 1 bis 7, dadurch gekennzeichnet, daß die Borsten (27) oder Fäden beidendseitig so gefaßt sind, daß sie mittels gleichförmig radial sich aufweitender Bogenabschnitte an den Innenwandabschnitten der gabelförmigen Fuge (5) beweglich und abdichtend anliegen.

10. Dichtung nach den Ansprüchen 1 bis 9, dadurch gekennzeichnet, daß sie zwischen geradlinigen (3, 4) oder vorzugsweise gleichsinnig gekrümmt verlaufenden Bauteilen ausgebildet ist.

11. Dichtung nach den Ansprüchen 1 bis 9, dadurch gekennzeichnet, daß das Tragelement (6') für die Bürste (15, 16) an einem geradlinigen Bauteilabschnitt z. B. an einem Gehäuse (3), das gabelförmige Gegenstück (7') an bzw. von einem gegen den geradlinigen Bauteilabschnitt abgekrümmten Ende des Schalenelements (14') ausgebildet ist (Fig. 4).

12. Dichtung nach einem oder mehreren der Ansprüche 1 bis 11, dadurch gekennzeichnet, daß die Dichtungspaarung zwischen Bürste (2) und Fuge (5) in einer gemeinsamen, zwischen zwei Bauteilen (Gehäuse 3, Schalenelement 14') geneigten Ebene verläuft.

13. Dichtung nach einem oder mehreren der Ansprüche 1 bis 12, dadurch gekennzeichnet, daß die Bauteile Gehäusestrukturbauteile von Turbomaschinen, insbesondere Gasturbinentriebwerken sind.

14. Dichtung nach einem oder mehreren der Ansprüche 1 bis 13, dadurch gekennzeichnet, daß sie eine Heißgasabsperrdichtung ist (Fig. 4).

15. Dichtung nach einem oder mehrer der Ansprüche 1 bis 14 für einen Wärmetauscher mit seitlich von getrennten Druckluftführungen (13,14) auskragender Profilrohr-Matrix (12), die mit örtlichen Wandverkleidungen gegenüber einem die Heißgase (G) über die Matrix leitenden Außengehäuse (3) ausgestattet ist, dadurch gekennzeichnet, daß das erste Bauteil ein den Matrixumlenkbereich zumindest teilweise gegenüber der Strömung der Heißgase (G) abdeckendes Schalenelement (14') ist, das zwischen sich und dem Außengehäuse (3) als zweitem Bauteil einen mittels der Bürsten (15, 16) in ein- oder mehrfacher Anordnung abzudichtenden Zwischenraum (21) einschließt.

16. Dichtung nach Anspruch 15, gekennzeichnet durch deren Anordnung zwischen einer seitlichen Berandungsleitwand der Wärmetauscher-Matrix und einem die Heißgase führenden Außengehäuse eines Profilrohrwärmetauschers.


**Claims**

1. Packing for bridging a gap between two components (3, 4) adapted for movement relative to each other and in which a scaling element rigidly connected to the first component (3) has its other end guided in freely movable manner in a joint (5) in the second component (4), characterised in that the sealing element is a brush (2) which is forcibly guided into and is at all times enclosed in sealing tight manner by the joint (5).

2. Packing according to claim 1, characterised in that the joint (5) has a depth (7) attuned to the displacement movement which is expected of the component.

3. Packing according to claim 1 and 2, characterised in that the joint (5) has a width ($B_1$) which is smaller than the width ($B_2$) of the part of the brush which opens out.

4. Packing according to claim 1, 2 and 3 characterised in that the bristles or threads of the brush (2) are gripped and held on a supporting element (6) which extends over the total length or parallel with the wall of the component.

5. Packing according to claims 1 to 4, characterised in that the joint (5) is a constituent part of a bifurcated mating member (7) extending over the entire length or parallel with the wall of the component.

6. Packing according to claims 4 and 5, characterised in that the supporting element (6) and the mating member (7) are connected to the associated component (3, 4) via separate angled pieces (8, 9) or by means of integral angled pieces (Fig. 3).

7. Packing according to claims 1 to 6, characterised in that the joint (5) is provided at the inlet end with facing edges (10, 11) which are bent outwardly in rounded fashion on both sides.

8. Packing according to one or more of claims 1 to 7, characterised in that the joint (5) comprises at its inlet end a forceps-like bristle guiding restriction (26) behind which the joint (5) widens out over the end of the brush which is capable of expansion.

9. Packing according to one or more of claims 1 to 7, characterised in that the bristles (27) or threads are so gripped at both ends that they bear in movable and in sealing tight manner through identically radially widening-out arcuate portions against the inside wall portions of the bifurcated joint (5).

10. Packing according to claims 1 to 9, characterised in that it is constructed between components which are rectilinear (3, 4) or which preferably extend in a curvilinear manner in the same direction.

11. Packing according to claims 1 to 9, characterised in that the supporting element (6') for the brush (15, 16) is constructed on a rectilinear portion of a component, e.g. on a housing (3) while the bifurcated mating member (7') is constructed on or from an end of the shell element (14') which is curved away from the rectilinear part of the component (Fig. 4).

12. Packing according to one or more of claims 1 to 11, characterised in that the packing pairing between brush (2) and joint (5) extends in a common inclined plane between two components (housing 3, shell element 14').

13. Packing according to one or more of claims 1 to 12, characterised in that the components are housing structure components of turbines, particularly gas turbine propulsion units.

14. Packing according to one or more of claims 1 to 13, characterised in that it is a hot gas barrier packing (Fig. 4).

15. Packing according to one or more of claims 1 to 14 for a heat exchanger with a profile tube matrix (12) projecting laterally from separate compressed air guides (13, 14) and equipped with local wall cladding opposite an external housing (3) which conducts the heated gases (G) over the matrix, characterized in that the first component is a shell element (14') which at least partially masks the deflecting portion of the matrix against the flow of heated gases (G), the shell element (14') enclosing between itself and the outer housing (3), as a second component, an intermediate space (21) which it is intended should be sealed by means of the brushes (15, 16) in a single or multiple arrangement.

16. Packing according to claim 15, characterised in that it is disposed between a lateral marginal wall of the heat exchanger matrix and an external housing of a profile tube heat exchanger which is adapted to fluide the heated gases.

**Revendications**

1. Joint d'étanchéité pour le pontage d'un intervalle entre deux parties constitutives mobiles l'une par rapport à l'autre (3, 4), joint dans lequel un élément d'étanchement solidaire de la première partie constitutive (3) est guidé, en étant librement mobile, par son autre extrémité, dans une emboîture (5) de la seconde partie constitutive (4), joint d'étanchéité caractérisé en ce que l'élément d'étanchement est une brosse (2), qui est impérativement guidée dans l'emboîture (5) et qui est entourée par cette dernière de façon constamment étanche.

2. Joint selon la revendication 1, caractérisé en ce que l'emboîture (5) a une profondeur (T) accordée au déplacement de coulissement à attendre de la partie constitutive.

3. Joint d'étanchéité selon l'une des revendications 1 et 2, caractérisé en ce que l'emboîture (5) a une largeur ($B_1$) qui est d'une dimension inférieure à la largeur ($B_2$) de la partie de brosse s'étalant.

4. Joint d'étanchéité selon une des revendications 1, 2 et 3, caractérisé en ce que les poils ou fils de la brosse (2) sont saisis et maintenus sur un élément porteur (6) s'étendant sur toute la longueur de la partie constitutive ou bien s'étendant parallèlement à la paroi de la partie constitutive.

5. Joint d'étanchéité selon les revendications 1 à 4, caractérisé en ce que l'emboîture (5) fait partie d'une pièce antagoniste (7) en forme de fourche s'étendant sur toute la longueur de la partie constitutive ou bien s'étendant parallèlement à la paroi de la partie constitutive.

6. Joint d'étanchéité selon les revendications 4 et 5, caractérisé en ce que l'élément porteur (6) et la pièce antagoniste (7) sont reliés à la partie constitutive (3, 4), à laquelle ils sont associés, par l'intermédiaire de pièces en équerre séparées (8, 9) ou bien au moyen de pièces en équerre intégrées (figure 3).

7. Joint d'étanchéité selon les revendications 1 à 6, caractérisé en ce que l'emboître (5) est pourvue de bords frontaux (10, 11) recourbés en arrondi vers l'extérieur.

8. Joint d'étanchéité selon une ou plusieurs des revendications 1 à 7, caractérisé en ce que l'emboître (5) comporte côté entrée, un rétrécissement (26), en forme de pince, pour le guidage des poils de la brosse, rétrécissement derrière lequel l'emboître (5) s'élargit vers l'extérieur sur l'extrémité étalée de la brosse.

9. Joint d'étanchéité selon une ou plusieurs des revendications 1 à 7, caractérisé en ce que les poils (27) ou fils de la brosse sont saisis des deux côtés, de sorte qu'ils s'appliquent de façon mobile et étanche contre les parties des parois internes de l'emboître (5) en forme de fourche par des segments d'arc s'élargissant radialement de façon uniforme.

10. Joint d'étanchéité selon les revendications 1 à 9, caractérisé en ce qu'il est établi entre des parties constitutives rectilignes (3, 4) ou de préférence courbées dans le même sens.

11. Joint d'étanchéité selon les revendications 1 à 9, caractérisé en ce que l'élément porteur (6') pour la brosse (15, 16) est établi sur un tronçon rectiligne de partie constitutive, par exemple sur un carter (3), tandis que la pièce antagoniste (7') en forme de fourche est prévue sur ou bien depuis une extrémité, recourbée vers ce tronçon rectiligne de la partie constitutive, de l'élément de coquille (14' (figure 4).

12. Joint d'étanchéité selon une ou plusieurs des revendications 1 à 11, caractérisé en ce que l'appariement des joints d'étanchéité entre la brosse (2) et l'emboître (5) s'étend dans un plan incliné commun entre deux parties constitutives (carter 3, élément de coquille 14').

13. Joint d'étanchéité selon une ou plusieurs des revendications 1 à 12, caractérisé en ce que les parties constitutives sont des parties constitutives de structures de carter de turbomachines, notamment de propulseurs à turbine à gaz.

14. Joint d'étanchéité selon une ou plusieurs des revendications 1 à 13, caractérisé en ce qu'il est utilisé pour arrêter les gaz chauds.

15. Joint d'étanchéité selon une ou plusieurs des revendications 1 à 14, pour un échangeur thermique avec une matrice (12) en tubes profilés, placée latéralement en porte-à-faux de conduites séparées d'air comprimé (13, 14), et qui est équipée de revêtements locaux de paroi vis-à-vis d'un carter extérieur (3) canalisant les gaz chauds (G) sur la matrice, joint d'étanchéité caractérisé en ce que la première partie constitutive est un élément de coquille (14') recouvrant au moins partiellement la zone d'inversion de la matrice vis-à-vis de l'écoulement des gaz chauds (G), et qui délimite entre lui et le carter extérieur (3), jouant le rôle de deuxième partie constitutive, un espace intermédiaire (21) devant être étanché par les brosses (15, 16) mises en oeuvre selon une disposition unique ou multiple.

16. Joint d'étanchéité selon la revendication 15, caractérisé en ce qu'il est disposé entre une paroi directrice latérale de bordure de la matrice d'échangeur thermique et un carter extérieur canalisant les gaz chauds d'un échangeur thermique à tubes profilés.

FIG.1

FIG.2

FIG.3

x freie Bewegungsrichtungen

FIG. 4

EP 0 199 322 B1

FIG.5

FIG.6